# EUROPÄISCHE PATENTANMELDUNG

(11) **EP 4 524 503 A1**
(43) Veröffentlichungstag der Anmeldung: **19.03.2025**
(21) Anmeldenummer: 24020290.3
(22) Anmeldetag: 18.09.2024
(51) Int. Cl.: F28D 20/00, F28F 21/08

(54) **FESTSTOFFWÄRMESPEICHER**

(30) Priorität: 18.09.2023 DE 102023125141
(71) Anmelder: Simply Solar GbR, 89344 Aislingen (DE)
(72) Erfinder: Müller, Christoph, 52062 Aachen (DE); Hoedt, Heike, 89344 Aislingen (DE); Scheffler, Wolfgang, 89344 Aislingen (DE)
(74) Vertreter: Völger, Karl Wolfgang

(57) **Zusammenfassung**

Die vorliegende Erfindung bezieht sich auf ein Wärmeübertragungselement (11) aus thermisch leitendem Material, das monolithisch ausgebildet ist, umfassend
- zumindest eine Aufnahmevorrichtung (5, 7) zur Aufnahme zumindest eines Heizelements (2), die in dem Wärmeübertragungselement (11) angeordnet ist,
- zumindest eine Führungsvorrichtung (6, 8) zum Führen zumindest einer Wärmeübertragungseinrichtung (3), die in dem Wärmeübertragungselement (11) angeordnet ist,
- wobei das Wärmeübertragungselement (11) parallel zu der mindestens einen Aufnahmevorrichtung (5, 7) und/oder der mindestens einen Führungsvorrichtung (6, 8) mindestens zwei ebene Außenflächen aufweist, die in flächigem Kontakt mit einem Speichermodul (1) für Wärme bringbar sind.

Die vorliegende Erfindung bezieht sich ferner auf einen Feststoffwärmespeicher sowie einen Gesamtspeicher (100).

## Beschreibung

Die vorliegende Erfindung bezieht sich auf einen neuartigen Feststoffwärmespeicher.

Feststoffwärmespeicher sind in der Energietechnik grundsätzlich bekannt. Dabei sind sog. sensible Wärmespeicher oder kapazitive Wärmespeicher die am häufigsten eingesetzten Typen. Alle bekannten Systeme beruhen grundsätzlich auf dem gleichen physikalischen Grundprinzip der Energiespeicherung, dass beim Einbringen der Energie einem Speichermedium Wärme zugeführt wird, so dass dieses auf ein höheres Temperaturniveau gehoben wird. Die Kapazität eines Wärmespeichers richtet sich nach der spezifischen Wärmekapazität des eingesetzten Materials und dessen Masse sowie dem Temperaturunterschied, der realisiert werden kann. Beim Entnehmen der Energie wird der Prozess umgekehrt und dem Speichermedium Wärmeenergie entzogen, wodurch die Temperatur im Wärmespeicher abnimmt.

Feststoffe für Wärmespeicher bieten einige Vorteile bei der Speicherung von Wärme, da sie sich beispielsweise auch bei sehr hohen Temperaturen über 400 °C ohne großen Aufwand und ohne Gefahrenpotenzial drucklos betreiben lassen. Dem stehen jedoch im Vergleich zu flüssigkeitsbasierten Wärmespeichern die Nachteile des erhöhten technischen Aufwands gegenüber, um die Wärme in den Feststoff einzubringen und zu entnehmen.

So offenbart beispielsweise DE 10 2012 017 039 A1 ein Feststoffwärmespeichermodul sowie dessen Herstellung. Zur Speicherung von thermischer Energie wird ein Fluid durch das offenbarte System geleitet wodurch sich der umgebende Festkörper erwärmt und diese Energie aufnimmt.

In DE 11 2012 002 387 T5 wird ferner zum Beispiel ein System beschrieben, welches ein Trägermedium für Wärme nutzt, um diese dann in einem Festkörperspeicher zu speichern.

Die Speicherung von elektrischer Energie ist teuer und meist mit hohen Verlusten verbunden. Bei günstigen Strompreisen kann es sich jedoch lohnen, die elektrische Energie in Form von Wärme zu speichern um diese zu späteren Zeitpunkten mit geringem Verlust und größerer Spitzenleistung abrufen zu können. Bei der Umwandlung von elektrischer Energie in Wärmeenergie entstehen nur minimale Verluste. Alle bekannten Systeme nutzen ein Wärmeträgermedium, um die Energie unabhängig von Ihrer Art, also auch elektrische Energie, in den Wärmespeicher zu überführen. Es besteht der Bedarf nach einem neuartigen, vereinfachten System zur Speicherung von Energie.

Der vorliegenden Erfindung liegt daher die Aufgabe zugrunde, die Nachteile des Standes der Technik zu überwinden und einen Feststoffwärmespeicher bereitzustellen, der Energie, insbesondere elektrische Energie, direkt speichert und damit Umwandlungsverluste zumindest verringert. Ferner ist es die Aufgabe, ein Wärmeübertragungselement aus thermisch leitendem Material anzugeben, das für verschiedene Speichermodule variabel verwendbar ist.

Die vorstehend genannte Aufgabe wird in einem ersten Aspekt der vorliegenden Erfindung durch ein Wärmeübertragungselement (11) aus thermisch leitendem Material gelöst, das monolithisch ausgebildet ist, umfassend
- zumindest eine Aufnahmevorrichtung (5, 7) zur Aufnahme zumindest eines Heizelements (2), die in dem Wärmeübertragungselement (11) angeordnet ist,
- zumindest eine Führungsvorrichtung (6, 8) zum Führen zumindest einer Wärmeübertragungseinrichtung (3), die in dem Wärmeübertragungselement (11) angeordnet ist,
- wobei das Wärmeübertragungselement (11) parallel zu der mindestens einen Aufnahmevorrichtung (5, 7) und/oder der mindestens einen Führungsvorrichtung (6, 8) mindestens zwei ebene Außenflächen aufweist, die in flächigem Kontakt mit einem Speichermodul (1) für Wärme bringbar sind.

Das Wärmeübertragungselement (11) weist einen rechteckigen Querschnitt auf, bei dem zwei gegenüberliegende Seiten parallel zueinander stehen und dazu ausgelegt sind, in flächigen Kontakt mit einem Speichermodul (1) für Wärme zu stehen. Hierzu eignen sich insbesondere die größerflächigen Ober- und Unterseiten des Wärmeübertragungselements (11). Die Seitenflächen sind ebenfalls eben ausgebildet und stehen parallel zueinander. Sie können ebenfalls mit benachbarten Wärmeübertragungselementen (11) und/oder Speichermodulen (1) in flächigen thermischen Kontakt gebracht werden.

Das Wärmeübertragungselement (11) ist monolithisch ausgebildet, d.h. es besteht aus einem Block von homogenem Material.

Die Aufnahmevorrichtung (5, 7) zur Aufnahme zumindest eines Heizelements (2) wird im Folgenden auch vereinfacht als "Vorrichtung (5, 7) zur Aufnahme zumindest eines Heizelements (2)" bezeichnet, ebenso wie die Führungsvorrichtung (6, 8) zum Führen zumindest einer Wärmeübertragungseinrichtung (3) vereinfacht als "Vorrichtung (6, 8) zum Führen zumindest einer Wärmeübertragungseinrichtung (3)" bezeichnet wird.

Die Aufnahmevorrichtung (5, 7) und die Wärmeübertragungseinrichtung (3) sind in dem Wärmeübertragungselement (11) angeordnet. Das kann bedeuten, dass diese sowohl im Inneren des monolithischen Elements als auch eingebettet in die Außenflächen angeordnet sind.

Das erfindungsgemäße Wärmeübertragungselement (11) weist den Vorteil auf, dass damit ein universelles Wärmeübertragungselement (11) angegeben wird, das einerseits mindestens ein Heizelement (2) zum Einbringen von Energie und andererseits eine Wärmeübertragungseinrichtung (3) zum Transportieren und Abgeben von (Wärme)-Energie einschließt. Das erfindungsgemäße Wärmeübertragungselement (11) kann in beliebiger Anzahl an jedes zur Aufnahme und Speicherung von Wärme geeignete Material eines Speichermoduls (1) in thermischem Kontakt angelegt werden, wobei das Material variabel angepasst an den Einsatzzweck bzw. die aufzunehmenden Temperaturen und Wärmemengen ausgewählt werden kann. Durch das erfindungsgemäße Wärmeübertragungselement (11) ist es auch möglich, die Speichermodule (1) als solche bspw. bei einer Änderung des Einsatzzwecks auszutauschen.

Das erfindungsgemäße Wärmeübertragungselement (11) kann in einer ersten alternativen Ausführungsform als monolithisches einteiliges Element ausgebildet sein, wobei die Aufnahmevorrichtung (5, 7) als erste Bohrungen (7) und die Führungsvorrichtung (6, 8) als zweite Bohrungen (8) oder zweite Nuten (6) in dem Wärmeübertragungselement (11) angeordnet sind.

Diese erste alternative Ausführungsform ist aufgrund der geschlossenen Bauform sehr einfach zu handhaben.

Wird der Wärmeträger direkt durch die Bohrung der Führungsvorrichtung (6, 8) geleitet, verbessert sich der Wärmeübergang und die Kosten für die Wärmeübertragungseinrichtung (3) entfallen.

In einer zweiten alternativen Ausführungsform kann das erfindungsgemäße Wärmeübertragungselement als zweiteiliges monolithisches Element mit zwei Elementhälften (11a, 11b) ausgebildet sein, wobei die Aufnahmevorrichtung (5, 7) als erste Nuten (5) auf den Innenflächen und die Führungsvorrichtung (6, 8) als zweite Nuten (6) auf den Innenflächen oder auf den Außenflächen der zwei Elementhälften (11a, 11b) angeordnet sind.

Diese offene Bauform der zweiten alternativen Ausführungsform ermöglicht einen Austausch von Heizelementen (2) und Wärmeübertragungseinrichtungen (3), bspw. bei Änderung der thermischen Anforderungen. Die offene Bauform weist einen Verriegelungsmechanismus auf, um die beiden Elementhälften (11a, 11b) sicher miteinander zu verbinden.

In einer speziellen Weiterbildung ist das zumindest eine Heizelement (2) als Aufnahmevorrichtung (5, 7) und die zumindest eine Wärmeübertragungseinrichtung (3) als Führungsvorrichtung (6, 8) in dem Wärmeübertragungselement (11) fest eingegossen angeordnet.

Es hat sich für die Effizienz der Wärmeübertragung als vorteilhaft herausgestellt, wenn das erfindungsgemäße Wärmeübertragungselement (11) aus einem metallischen Werkstoff, insbesondere aus Aluminium oder Eisen oder Legierungen davon, besteht.

Die vorstehend genannte Aufgabe wird in einem zweiten Aspekt der vorliegenden Erfindung durch einen Feststoffwärmespeicher gelöst, umfassend
- zumindest ein Speichermodul (1),
- zumindest ein Heizelement (2), das mit dem zumindest einen Speichermodul (1) in thermisch leitendem Kontakt steht,
- zumindest eine Wärmeübertragungseinrichtung (3), die mit dem zumindest einen Speichermodul (1) in thermisch leitendem Kontakt steht,
- eine umgebende Hülle aus thermisch isolierendem Material,
wobei das zumindest eine Speichermodul (1) aufweist,
- Vorrichtungen (5, 7) zur Aufnahme zumindest eines Heizelements (2),
- Vorrichtungen (6, 8) zum Führen zumindest einer Wärmeübertragungseinrichtung (3).

Das Speichermodul (1) des zweiten Aspekts der vorliegenden Erfindung ist im Wesentlichen monolithisch aufgebaut, kann aber je nach Bedarf Bohrungen aufweisen, wie nachstehend noch gezeigt wird. Als Grundform wird ein Vierkantprofil bevorzugt, da es einfach herzustellen und handzuhaben ist. Jede andere Form mit n-eckigem Querschnitt, die eine formschlüssige Anordnung für guten Wärmeübertragung gewährleistet, ist erfindungsgemäß ebenfalls denkbar.

Das Heizelement (2) steht erfindungsgemäß in direktem thermischem Kontakt mit dem zumindest einen Speichermodul (1), so dass kein zusätzlicher Wärmeträger wie im Stand der Technik benötigt wird.

Besonders bevorzugt ist das Heizelement (2) ein elektrisches Heizelement, das vorhandene elektrische Energie direkt als Wärme in das Speichermodul (1) einbringt. Bei bestimmten Metallen kann die Energie vom Heizelement (2) auch induktiv in das Speichermodul (1) eingebracht werden.

Das Heizelement (2) kann erfindungsgemäß jedoch auch eine Dampfleitung oder dergleichen sein, welche die Wärmeenergie in das Speichermodul (1) einbringt. In einem speziellen Fall kann das Heizelement (2) komplett entfallen, wenn sowohl das Einbringen als auch das Entnehmen über die Wärmeübertragungseinrichtung (3) und den Wärmeträger stattfindet.

Die Wärmeübertragungseinrichtung (3) dient dazu, die im erfindungsgemäßen Feststoffwärmespeicher gespeicherte Energie bei Bedarf wieder abzugeben. Sie kann daher beispielsweise eine Rohrleitung sein, die von einem zu erhitzenden Medium, insbesondere ein flüssiges oder ein gasförmiges Wärmeträgermedium, durchströmt wird. Besonders bevorzugt wird mittels der Wärmeübertragungseinrichtung (3) Prozessdampf zur weiteren Verwendung erzeugt.

Die Komponenten des Feststoffwärmespeichers werden von einer Hülle aus thermisch isolierendem Material umgeben, insbesondere von einer Hochtemperaturisolierung. Bevorzugt werden siliziumbasierte Dämmmaterialien zum Einsatz gebracht, welche die Wärmeverluste selbst bei Maximaltemperatur und kleinen Speichergrößen auf unter 10 % / 24 h reduzieren. Mit zunehmender Speichergröße verbessert sich das Verhältnis von Wärmeverlust pro Speichereinheit weiterhin aufgrund des günstigeren Verhältnisses von Oberfläche zu Masse.

Die vorliegende Erfindung weist im Rahmen des zweiten Aspekts den Vorteil auf, dass durch die direkte Wärmeübertragung von einem Heizelement (2) auf ein Speichermodul (1) Umwandlungsverluste deutlich verringert werden. Das gilt insbesondere bei der Speicherung von ursprünglich elektrischer Energie in Form von Wärme. Hierdurch wird eine aus dem Stand der Technik nicht bekannte Effizienz erreicht.

Diese hohe Speichereffizienz prädestiniert den erfindungsgemäßen Feststoffwärmespeicher für eine effiziente Speicherung von fluktuierenden Energiequellen, wie sie beispielsweise Windturbinen und Solaranlagen darstellen. Dabei kann die Speicherung auch über viele Tage energieeffizient erfolgen.

In dem angegebenen zweiten Aspekt des Feststoffwärmespeichers sind das Speichermodul (1) und das Wärmeübertragungselement (11) in einem einzigen Bauteil vereinigt. Dies ist für Wärmespeicher mit kleinerem Volumen und/oder häufiger Modifikation vorteilhaft, da so weniger Bauteile gehandhabt werden müssen.

Die Abmessungen der erfindungsgemäßen Speichermodule (1) ergeben sich aus der Wärmeleitfähigkeit von deren jeweiligem Materials. So benötigen Module aus Aluminium weniger Heizelemente (2) und Wärmeübertragungseinrichtungen (3) als Speichermodule (1) aus Eisen. Speichermodule (1) aus Aluminium können daher breiter und höher ausgelegt werden.

Um eine möglichst optimale Wärmeübertragung zu erreichen, hat es sich als vorteilhaft herausgestellt, wenn das zumindest eine Heizelement (2) auf den außenliegenden Konturen oder im Inneren des zumindest einen Speichermoduls (1) in dafür vorgesehenen ersten Nuten (5) oder ersten Bohrungen (7) als Vorrichtungen (5, 7) zur Aufnahme angeordnet ist.

Es ist dabei besonders vorteilhaft, wenn das zumindest eine Heizelement (2) formschlüssig in den ersten Nuten (5) oder den ersten Bohrungen (7) aufgenommen wird, so dass ein möglichst vollflächiger Kontakt und eine optimale Wärmeübertragung vorliegt.

Ebenso um die Wärmeübertragung zu optimieren, hat es sich als vorteilhaft herausgestellt, wenn die zumindest eine Wärmeübertragungseinrichtung (3) auf den außenliegenden Konturen oder im Inneren des zumindest einen Speichermoduls (1) in dafür vorgesehenen zweiten Nuten (6) oder zweiten Bohrungen (8) als Vorrichtungen (6, 8) zum Führen geführt ist, wobei die zweiten Nuten (6) oder die zweiten Bohrungen (8) mit der mindestens einen Wärmeübertragungseinrichtung (3) in formschlüssigem Kontakt stehen.

Eine alternative Ausführungsform des erfindungsgemäßen Feststoffwärmespeichers sieht vor, dass das zumindest eine Heizelement (2) als Vorrichtungen (5, 7) zur Aufnahme und die zumindest eine Wärmeübertragungseinrichtung (3) als Vorrichtungen (6, 8) zum Führen in dem zumindest einen Speichermodul (1) fest eingegossen angeordnet sind. Insbesondere bei kleinen Anlagen hat es sich als vorteilhaft herausgestellt, wenn zur Minimierung des Montageaufwands Heizelement (2) und Wärmeübertragungseinrichtung (3) direkt in das Speichermodul (1), insbesondere aus Aluminium, eingegossen werden. Damit wird auch ein optimaler Wärmeübergang erreicht zwischen den einzelnen Bauteilen erreicht.

In einem dritten Aspekt der vorliegenden Erfindung wird die vorstehend genannte Aufgabe durch einen Feststoffwärmespeicher gelöst, umfassend
- zumindest ein Speichermodul (1),
- zumindest ein Heizelement (2), das mit dem zumindest einen Speichermodul (1) in thermisch leitendem Kontakt steht,
- zumindest eine Wärmeübertragungseinrichtung (3), die mit dem zumindest einen Speichermodul (1) in thermisch leitendem Kontakt steht,
- eine umgebende Hülle aus thermisch isolierendem Material,
wobei das zumindest eine Speichermodul (1) aufweist,
- Vorrichtungen (5, 7) zur Aufnahme zumindest eines Heizelements (2),
- Vorrichtungen (6, 8) zum Führen zumindest einer Wärmeübertragungseinrichtung (3),
dadurch gekennzeichnet, dass die Vorrichtungen (5, 7) zur Aufnahme zumindest eines Heizelements (2) und die Vorrichtungen (6, 8) zum Führen zumindest einer Wärmeübertragungseinrichtung (3) in einem Wärmeübertragungselement (11) nach einem der Ansprüche 1 bis 5 angeordnet sind, das mit dem zumindest einen Speichermodul (1) in thermisch leitendem Kontakt steht.

Die zum zweiten Aspekt gegebenen Definitionen der einzelnen Bauteile gelten grundsätzlich auch für den nun angegebenen dritten Aspekt.

Das Speichermodul (1) des dritten Aspekts der vorliegenden Erfindung ist ebenfalls im Wesentlichen monolithisch aufgebaut, benötigt jedoch keine Bohrungen oder dergleichen.

Durch das erfindungsgemäße Vorsehen des Wärmeübertragungselements (11) steht das Heizelement (2) im dritten Aspekt erfindungsgemäß in indirektem thermischem Kontakt mit dem zumindest einen Speichermodul (1), gleiches gilt für Wärmeübertragungseinrichtung (3). Auch hier wird kein zusätzlicher Wärmeträger wie im Stand der Technik benötigt, vielmehr wirkt das erfindungsgemäße Wärmeübertragungselement (11) selbst schon als eine Art Feststoffwärmespeicher, der seine thermische Energie an das zumindest eine Speichermodul (1) weitergibt.

Da sowohl das Wärmeübertragungselement (11) als auch das Speichermodul (1) zur Speicherung beitragen, wird auch hier eine aus dem Stand der Technik nicht bekannte Effizienz erreicht, welche den erfindungsgemäßen Feststoffwärmespeicher für eine effiziente Speicherung von fluktuierenden Energiequellen prädestiniert.

Eine wichtige Ausführungsform der vorliegenden Erfindung sieht vor, dass das Speichermodul (1) aus einem metallischen Werkstoff, insbesondere aus Aluminium oder Eisen oder Legierungen davon, oder einem nicht-metallischen Material, das Wärme speichern kann, besteht.

Diese Metalle bzw. Legierungen ermöglichen Arbeitstemperaturen von 350 °C bis 600 °C, wodurch Prozessdampf für industriell übliche Anwendungsbereiche bis über 200 °C bereitgestellt werden kann.

Für einfache Anwendungen können auch preisgünstige Speichermaterialien wie Gusseisen oder rechteckig kompaktierte Schrottquader verwendet werden, da das erfindungsmäße Wärmeübertragungselement (11) diese gleichermaßen erhitzen kann. Vorrangig wird ein kostengünstigeres Material gewählt, um eine bessere Wirtschaftlichkeit zu erreichen, jedoch spielt auch die Wärmeleitfähigkeit eine Rolle, die die maximal entnehmbare Leistung mitbestimmt.

Wenn höhere Arbeitstemperaturen benötigt werden, können die erfindungsgemäßen Speichermodule (1) auch aus keramischen Werkstoffen bestehen. Die deutlich geringere Wärmeleitfähigkeit von keramischen Werkstoffen muss dann durch eine größere Dichte an Heizelementen (2) und Wärmeübertragungseinrichtungen (3) ausgeglichen werden.

Zu den in Abhängigkeit der Nutzung bevorzugten Materialien zählen beispielsweise auch hitzefester Zement oder Phasenwechselmaterialien (Phase Change Materials / PCM) zu denen in Behälter abgefüllte Salze gehören.

Die erfindungsgemäßen Speichermodule (1) nehmen die eingebrachte Wärme in einem Temperaturbereich, der für das jeweils verwendete Material hinsichtlich des Erreichens einer langen Lebensdauer angemessen ist. Bei Verwendung von Eisen können Temperaturen bis zu 700 °C gefahren werden, bei Aluminium sind es bis zu 400 °C. Noch höhere Temperaturen von 1000°C und mehr werden mit keramischen Werkstoffen erreicht.

Bei der Ausführungsform des dritten Aspekts der vorliegenden Erfindung werden die ersten und zweiten Nuten (5, 6) nicht in das Speichermodul (1) selbst eingebracht, wie es im zweiten Aspekt der Fall ist, sondern in das erfindungsgemäße gesonderte Wärmeübertragungselement (11), das dann zumindest auf seiner einen Seite vollflächig in thermischem Kontakt mit dem Speichermodul (1) steht. Besonders bevorzugt sind die ersten und zweiten Nuten (5, 6) so in die andere Seite des Wärmeübertragungselements (11) eingebracht, dass zwei zweiteilige Wärmeübertragungselemente (11) gegeneinander gedreht angeordnet aus den zweiten Nuten (6) eine zwischen den Wärmeübertragungselementen (11) angeordnete "Bohrung" bilden, welche eine gemeinsame Wärmeübertragungseinrichtung (3) mittig einschließt. Die ersten Nuten (5) können bevorzugt vollständig in dem zweiteiligen Wärmeübertragungselement (11) vorgesehen werden.

Diese Ausführungsform hat den Vorteil, dass die einzelnen Speichermodule (1) als einfache monolithische Vierkantprofile ausgeführt werden können, was die Herstellung vereinfacht und damit günstiger macht. Die einzelnen Speichermodule (1) lassen sich so variabler einsetzen, beispielsweise am Rand einer größeren Anordnung ohne außenliegende Nuten (5, 6). Andererseits können die Wärmeübertragungselemente (11) mit vertretbarem Aufwand hergestellt werden und erhöhen die Variabilität der einzelnen Komponenten.

In der kleinsten Ausführung der vorliegenden Erfindung kann ein einzelnes Speichermodul (1) alleine betrieben werden.

Eine Ausführungsform sieht vor, dass der erfindungsgemäße Feststoffwärmespeicher die Anschlüsse für das zumindest eine Heizelement (2) und die zumindest eine Wärmeübertragungseinrichtung (3) nur an einer Seite aufweist und die verbleibenden drei Seiten eben ausgeführt sind.

Mit dieser Geometrie bleiben drei ebene Seiten frei, so dass weitere erfindungsgemäße Feststoffwärmespeicher seitlich und Rücken an Rücken in thermischem Kontakt angeordnet werden können. So werden die Modularität und die freie Skalierbarkeit weiter erhöht.

Wie vorstehend schon angedeutet, ist es erfindungsgemäß bevorzugt, wenn mehrere Speichermodule (1) zu einem Gesamtspeicher (100) kombiniert werden und jedes Speichermodul (1) in thermischem Kontakt zu mindestens einem Heizelement (2) und zu mindestens einer Wärmeübertragungseinrichtung (3) steht. Dieser thermische Kontakt kann sowohl direkt wie im zweiten Aspekt vorgesehen werden wie auch mittels der vorstehend beschriebenen Wärmeübertragungselemente (11) im dritten Aspekt.

Die einfache mehrdimensionale Erweiterbarkeit ermöglicht eine einfache Anpassung an den Speicherbedarf. Gleichzeitig erhöht sich der Wirkungsgrad in Bezug auf die im Verhältnis zum Speichervolumen abnehmende Oberfläche. Dies steht im Gegensatz zu herkömmlichen Speichern, die entweder kundenspezifisch geplant und hergestellt werden müssen (z.B. saisonale Wärmespeicher für Nahwärmenetze) oder durch Parallelschaltung von Standardspeichern, die eine schlechtere Effizienz aufgrund des schlechteren Verhältnisses von Oberfläche zu Volumen aufweisen.

Mit der vorliegenden Erfindung wird auf diese Weise ein modularer Feststoffwärmespeicher geschaffen, der es erlaubt, mit Standardkomponenten (Speichermodule (1), Heizelemente (2), Wärmeübertragungseinrichtungen (3), Wärmeübertragungselemente (11)) in einer Art Baukastenprinzip beliebige Speichergrößen zu erstellen, die von wenigen kWh bis hin zu MWh Speicherkapazität reichen. Einzig die isolierende Hülle muss noch auf die tatsächliche Größe des erfindungsgemäßen modularen Feststoffwärmespeichers angepasst werden, was aufgrund von ebenfalls standardisierten Isolierkomponenten problemlos möglich ist.

Der modulare Aufbau des erfindungsgemäßen Feststoffwärmespeichers ermöglicht eine einfache Handhabung und Montage, da jedes Speichermodul (1) vom Gewicht her so ausgelegt ist, dass es bei Bedarf von ein oder zwei Personen oder von einer entsprechenden Transporteinrichtung bewegt und platziert werden kann. Im Gegensatz zu herkömmlichen großen Dampfspeichern, die meist aus einem einzigen großen Kessel bestehen, bedeutet dies einen deutlich geringeren logistischen Aufwand.

Der erfindungsgemäße modulare Feststoffwärmespeicher erlaubt es auf diese Weise, die Speicherkapazität unter Verwendung der Standardkomponenten beliebig auf die Nutzerbedürfnisse anzupassen. Auch eine nachträgliche Erweiterung des erfindungsgemäßen modularen Feststoffwärmespeichers stellt kein Problem dar. Dem Speichervolumen sind theoretisch keine Grenzen gesetzt, da sich die Module beliebig aneinanderreihen lassen.

Es hat sich für den Aufbau als sinnvoll herausgestellt, wenn im Fall von mehreren Speichermodulen (1) die Wärmeübertragungseinrichtungen (3) schleifenförmig mäandernd oder harfenförmig zwischen den einzelnen Speichermodulen (1), insbesondere in einem erfindungsgemäßen Wärmeübertragungselement (11), geführt werden.

Es ist ferner für den erfindungsgemäßen modularen Feststoffwärmespeicher vorteilhaft, wenn im Fall von mehreren Speichermodulen (1) diese in Ebenen (101a, 101b, 101c, ...) angeordnet sind und die Wärmeübertragungseinrichtungen (3) jeder Ebene (101a, 101b, 101c, ...) von Speichermodulen (1) an eine Sammelleitung (4) angeschlossen sind.

Ebenso werden die Heizelemente (2) jeder in Ebene (101a, 101b, 101c, ...) über Verteiler (10) miteinander verbunden.

Aus Gründen der Variabilität des erfindungsgemäßen Feststoffwärmespeichers wird dieser bevorzugt im Fall von mehreren Speichermodulen (1) durch einen modularen Aufbau von mehreren Speichermodulen (1) zonenweise unterteilt und betrieben, in dem Heizelemente (2) zu Heizzonen (T1, T2, T3, ...) zusammengeschaltet werden.

Die Heizelemente (2) werden in einer Weiterbildung intelligent gesteuert, so dass die verschiedenen (Eintritts-, Austritts-) Zonen des erfindungsgemäßen Feststoffwärmespeichers auf gleichem Temperaturniveau gehalten werden. Mit zunehmender Größe des Feststoffwärmespeichers verbessert sich das Verhältnis von Wärmeverlust pro Speichereinheit. Der Wärmeverlust ist jedoch auch bei kleinen Dimensionen des Feststoffwärmespeichers trotz der hohen Betriebstemperaturen bereits sehr klein, was u.a. durch die Verwendung von High-Tech Isoliermaterialien erreicht wird.

Aufgrund des hohes Wirkungsgrads, den der erfindungsgemäße Feststoffwärmespeicher erreicht, wird eine effiziente Speicherung von fluktuierenden Energiequellen wie Windturbinen und Solaranlagen auch über Tage hinweg ermöglicht.

Es ist insbesondere bevorzugt, wenn jede Heizzone (T1, T2, T3, ...) zumindest ein Thermoelement zur Erfassung der Temperatur aufweist, das mit einer Steuereinheit zur Temperatursteuerung der Heizzonen (T1, T2, T3, ...) verbunden ist.

In einem vierten Aspekt stellt die vorliegende Erfindung einen Gesamtspeicher (100) zur Verfügung, umfassend
- zumindest zwei erfindungsgemäße Feststoffwärmespeicher, wie sie vorstehend beschrieben wurde, die hintereinander und/oder nebeneinander angeordnet sind, wobei die zumindest zwei Feststoffwärmespeicher zumindest ein erfindungsgemäßes Wärmeübertragungselement (11), wie es vorstehend beschrieben wurde, aufweisen,
- eine den Gesamtspeicher (100) umgebende Hülle aus thermisch isolierendem Material.

Der erfindungsgemäße Gesamtspeicher (100) ist auf diese Weise vollständig modular aufgebaut und kann sehr flexibel an örtliche Gegebenheiten sowie an energetische Anforderungen angepasst werden.

Es hat sich als vorteilhaft erwiesen, wenn die zumindest zwei Feststoffwärmespeicher in zueinander thermisch leitendem Kontakt, hintereinander und/oder nebeneinander, angeordnet sind. Auch hierdurch werden Modularität und Flexibilität erhöht.

Besonders bevorzugt kann auch die den Gesamtspeicher (100) umgebende Hülle aus thermisch isolierendem Material modular aufgebaut sein, um angepasst werden zu können.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1:: eine schematische Darstellung eines erfindungsgemäßen modular aufgebauten Feststoffwärmespeichers nach einer Ausführungsform der Erfindung,
- Fig. 2:: eine schematische Darstellung eines erfindungsgemäßen Speichermoduls 1 nach einer ersten Variante einer ersten Ausführungsform,
- Fig. 3:: eine schematische Darstellung eines erfindungsgemäßen Speichermoduls 1 nach einer zweiten Variante einer ersten Ausführungsform,
- Fig. 4:: eine schematische eines Wärmeübertragungselements 11,
- Fig. 5:: eine schematische Darstellung zweier erfindungsgemäßer Speichermodule 1 mit dazwischen angeordneten Wärmeübertragungselementen 11,
- Fig. 6:: eine schematische Darstellung von Heizzonen T1 bis T5 in einem erfindungsgemäßen modular aufgebauten Feststoffwärmespeicher,
- Fig. 7:: eine schematische Darstellung eines einteiligen monolithischen Wärmeübertragungselements 11,
- Fig. 8:: eine schematische Darstellung eines zweiteiligen monolithischen Wärmeübertragungselements 11a, 11b,
- Fig. 9:: eine schematische Darstellung eines Gesamtspeichers 100 in einer Ausführungsform und
- Fig. 10:: eine schematische Darstellung eines mehrfach modular aufgebauten Gesamtspeichers 100.

Gleiche Bezugszeichen benennen in den Figuren die gleichen Elemente, aus Gründen der Übersichtlichkeit werden aber nicht alle Bezugszeichen in allen Figuren angegeben.

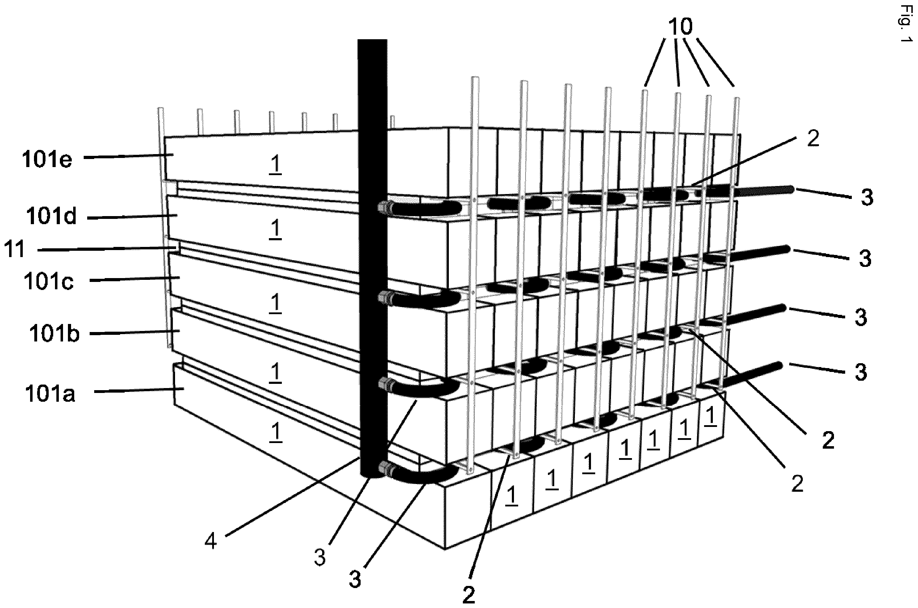

In Figur 1 ist eine schematische Darstellung eines erfindungsgemäßen modular aufgebauten Feststoffwärmespeichers nach einer bevorzugten Ausführungsform der Erfindung gezeigt. In fünf Ebenen 101a, 101b, 101c, 101d, 101e sind jeweils acht Speichermodule 1 nebeneinander in direktem thermischem Kontakt zueinander angeordnet. Zwischen den einzelnen Ebenen101a, 101b, 101c, 101d, 101e sind jeweils Paarungen von Wärmeübertragungselementen 11 angeordnet, die nach oben und nach unten jeweils in direktem thermischem Kontakt zu den entsprechenden Speichermodulen 1 stehen. Seitlich stehen die Paarungen von Wärmeübertragungselementen 11 ebenfalls in direktem thermischem Kontakt miteinander.

Durch die Paarungen von Wärmeübertragungselementen 11 verlaufen jeweils Heizelemente 2 und Wärmeübertragungseinrichtung 3. Die Heizelemente 2 sind in der vorliegenden Darstellung vorne mit Verteilern 10 verbunden. Die Wärmeübertragungseinrichtungen 3, die hier als Edelstahlrohre ausgeführt sind, sind so dimensioniert, dass ein möglichst geringer Druckverlust auf Seiten des Wärmeübertragungsmediums entsteht. Die Wärmeübertragungseinrichtungen 3 werden am Anfang und Ende in jeweils einer Sammelleitung 4 zusammengeführt, wobei dies in Figur 1 nur auf der linken Seite dargestellt ist.

In der dargestellten Ausführungsform verlaufen die Wärmeübertragungseinrichtungen 3, mäanderförmig gebogen durch zwischen den Ebenen 101a, 101b, 101c, 101d, 101e. Eine harfenförmige Anordnung ist erfindungsgemäß ebenfalls vorgesehen, hier jedoch nicht explizit dargestellt.

Der erfindungsgemäße Feststoffwärmespeicher weist eine Isolierung auf, die sich als Hülle um die in Figur 1 gezeigten Komponenten legt. Aus Gründen der Übersichtlichkeit und da die Darstellung wenig detailreich wäre, wird auf die Abbildung dieser Isolierung verzichtet. Als Material der Isolierung kann beispielsweise eine Schicht aus 8 cm 'Calostat" (Handelsname) eingesetzt werden, das ein rein mineralisches Produkt auf Basis von Siliziumdioxid ist.

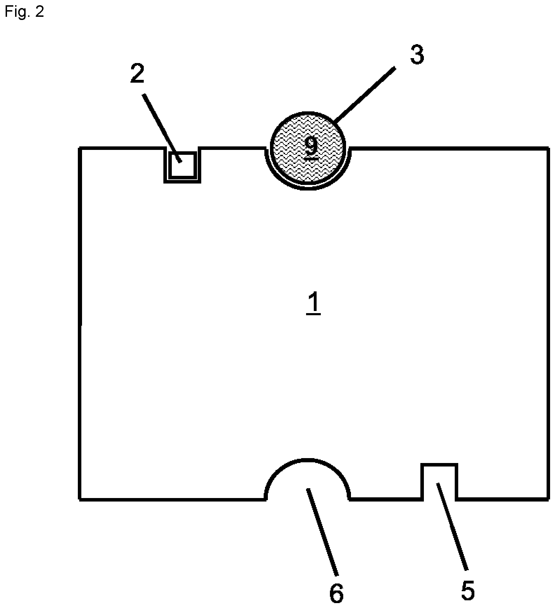

Ein erfindungsgemäßes Speichermodul 1 nach einer ersten Ausführungsform wird in Figur 2 in einer ersten Variante gezeigt. In dieser Ausführungsform weist das Speichermodul 1 in seiner Oberseite und in seiner Unterseite jeweils erste Nuten 5 und zweite Nuten 6 auf. Zur Verdeutlichung sind auf der Oberseite in der ersten Nut 5 ein Heizelement 2 und in der zweiten Nut 6 eine Wärmeübertragungseinrichtung 3 dargestellt. Aus der Darstellung wird deutlich, dass das Heizelement 2 vollständig in der Oberfläche aufgenommen ist, während die Wärmeübertragungseinrichtung 3 nur halb von dem Speichermodul 1 umfasst wird. Die zweite Hälfte dieser Wärmeübertragungseinrichtung 3 wird von dem darüber anzuordnenden Speichermodul 1 umfasst. Gleiches gilt für die Unterseite, was hier aber nicht dargestellt ist.

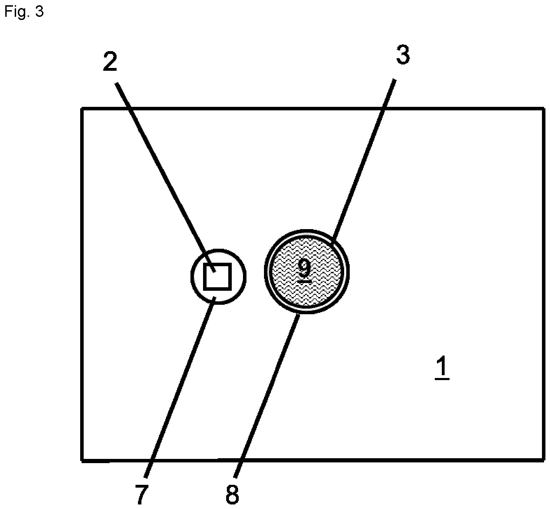

In Figur 3 wird eine zweite Variante dieser Ausführungsform dargestellt, bei der anstelle von erste Nuten 5 und zweite Nuten 6 erste Bohrungen 7 und zweite Bohrungen 8 im Inneren des Speichermoduls 1 vorgesehen sind, um das Heizelement 2 und die Wärmeübertragungseinrichtung 3 aufzunehmen.

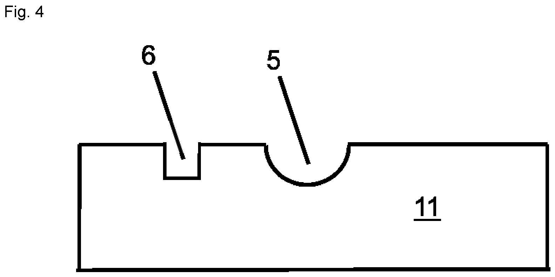

Alternativ zu dieser Ausführungsform kann die Wärmeübertragung durch Wärmeübertragungselemente 11 erfolgen, wie eines schematisch in Figur 4 dargestellt ist. Die Kontur der oberen Seite entspricht der Ausbildung von erster Nut 5 und zweiter Nut 6 in dem Speichermodul 1 der ersten Ausführungsform. Das Wärmeübertragungselement 11 hat jedoch eine deutlich geringere Dicke und eignet sich daher zur variablen Anbringung an den Speichermodulen 1.

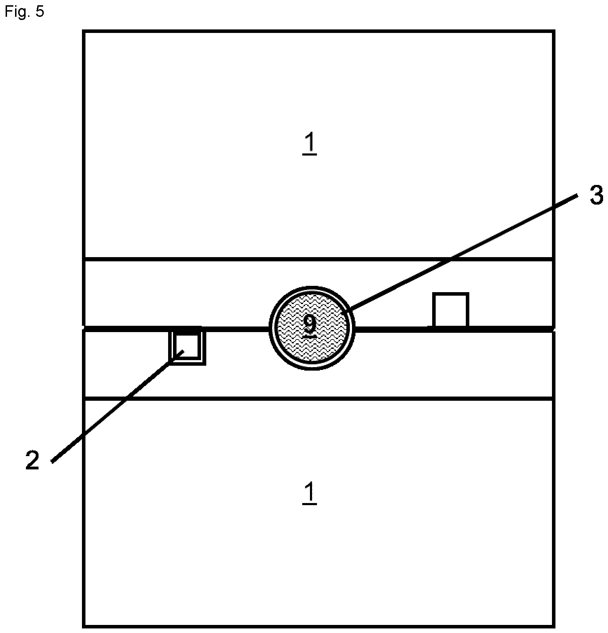

Wie zwei Wärmeübertragungselemente 11 zueinander und im Verhältnis zu den erfindungsgemäßen Speichermodulen 1 angeordnet werden, wird in Figur 5 gezeigt. Im Vergleich zu Figur 4 ist das obere Wärmeübertragungselement 11 um 180 Grad gedreht aufgesetzt, so dass zwischen den beiden Wärmeübertragungselementen 11 die Wärmeübertragungseinrichtung 3 umfasst wird. Das Heizelement 2 wird hier nur in einer der ersten Nuten 5 gezeigt.

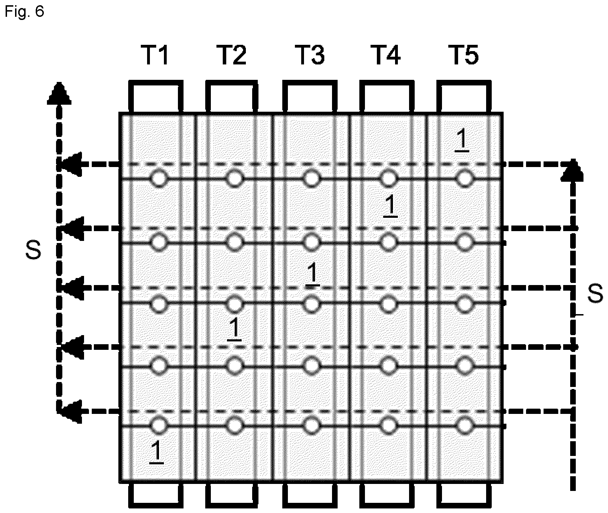

Figur 6 stellt schließlich schematische Heizzonen T1 bis T5 in einem erfindungsgemäßen modular aufgebauten Feststoffwärmespeicher dar. Der Feststoffwärmespeicher wird in mehrere Beladezonen aufgeteilt, indem Heizelemente 2 in Gruppen zusammengeschaltet werden. Die Aufteilung ergibt sich primär aus dem Temperaturgefälle, das sich mit dem Eintreten des kälteren Wärmeübertragungsmediums auf einer Seite des Feststoffwärmespeichers einstellt.

Die Temperaturzonen T1 bis T5 ergeben sich aus der Strömungsrichtung S des Wärmeübertragungsmediums durch die 5 x 5 Speichermodule 1.

Die mittlere Temperatur jeder Heizzone T1 bis T5 wird jeweils mit Thermoelementen erfasst. Ein Controller verarbeitet die Temperaturmessung und steuert die Gruppen von Heizelement 2 in der Art, dass sich immer schnellstmöglich eine gleichmäßige Temperaturverteilung über das Volumen des Feststoffwärmespeichers einstellt. So ist gewährleistet, dass die maximale Speicherkapazität ausgeschöpft wird und die Wärmeverluste minimiert werden.

Die Steuerung bietet als weitere Funktion die leistungsmäßige Anpassung an die schwankende, insbesondere von Photovoltaikanlagen oder Windkraftanlagen bereitgestellte Energie. Dabei wird die zur Verfügung stehende Energie durch Kommunikation mit der Energieerzeugungsanlage oder durch einen Netzbezugszähler ermittelt. Sobald ein Netzbezug stattfindet, wird die Leistung der Heizelemente 2 in der Beladezone mit der höchsten Temperatur soweit gedrosselt, dass kein Netzbezug mehr gemessen wird. Dadurch wird der teure Bezug von Netzenergie minimiert.

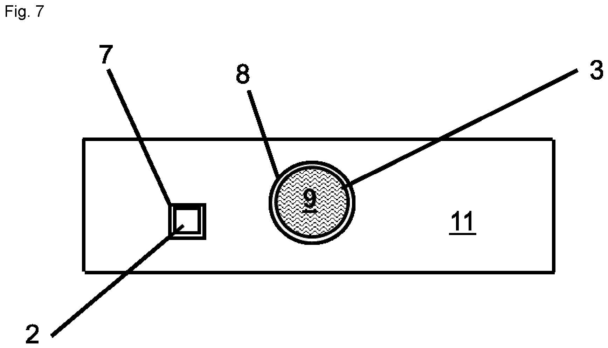

Figur 7 zeigt schematisch eine einteiliges monolithisches Wärmeübertragungselement 11, bei dem eine erste Bohrung 7 für das Heizelement 2 und eine zweite Bohrung 8 für die Wärmeübertragungseinrichtung 3 eingebracht sind. Die oben und unten dargestellten Flächen stehen mit entsprechenden Speichermodulen 1 in thermischem Kontakt.

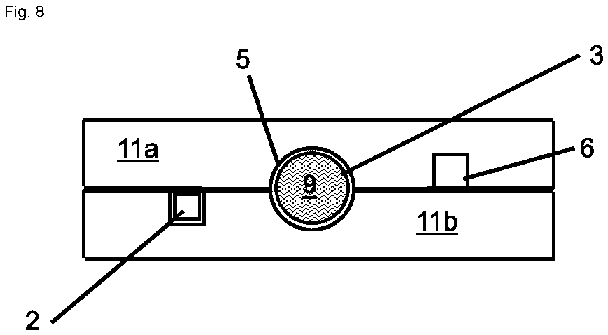

Figur 8 zeigt schematisch eine zu Figur 7 alternative Ausführungsform mit einem zweiteiligen monolithischen Wärmeübertragungselement 11a, 11b. Hier sind eine erste Nut 5 für die Wärmeübertragungseinrichtung 3 und eine zweite Nut 6 für das Heizelement 2 so eingebracht, dass beim Aufeinanderlegen der beiden Teile des Wärmeübertragungselements 11a, 11b die Wärmeübertragungseinrichtung 3 und das Heizelement 2 umschlossen werden.

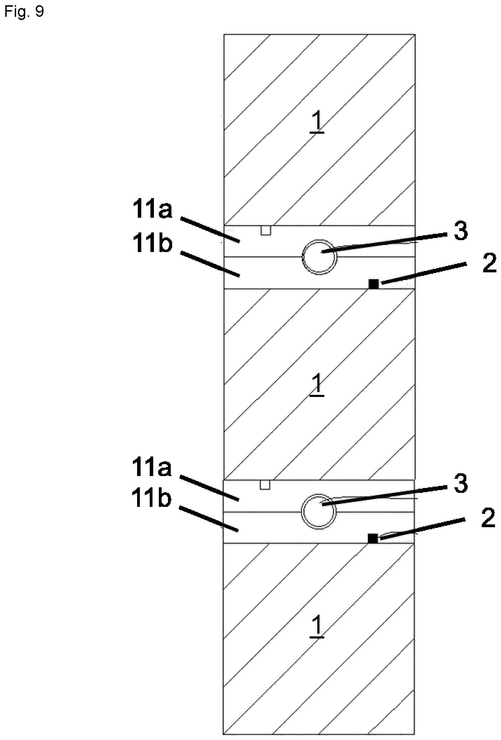

Eine schematische Darstellung eines Gesamtspeichers 100 in einer Ausführungsform wird in Figur 9 wiedergegeben. Hier beispielshaft an einem Stapel dargestellt, wie sich Speichermodule 1 und Wärmeübertragungselemente 11 abwechseln. Die Außenflächen rechts und links sind eben, so dass hier weitere Gesamtspeicher 100 in thermischem Kontakt angefügt werden können.

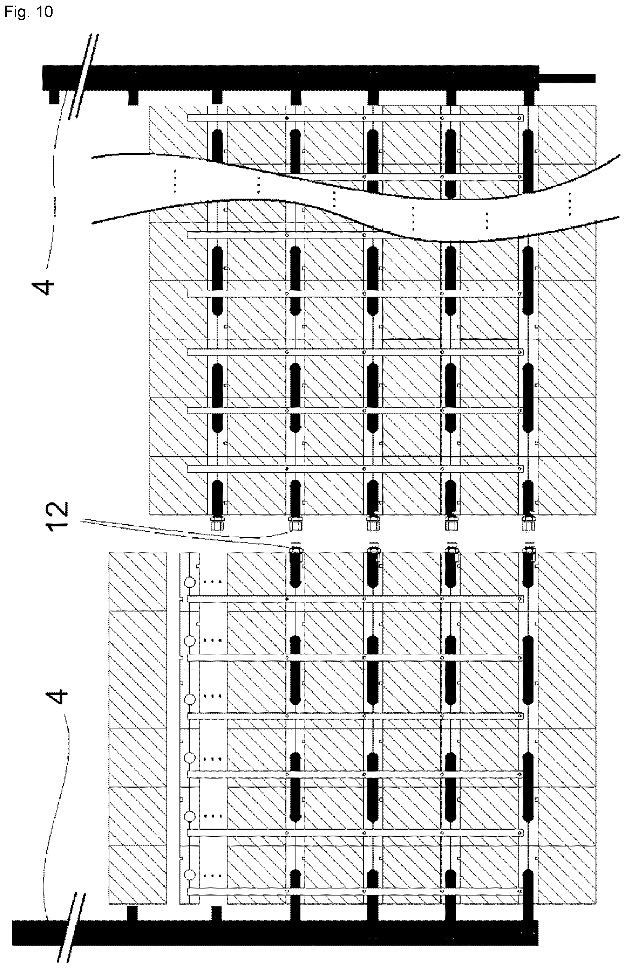

In Figur 10 ist ein mehrfach modular aufgebauter Gesamtspeicher 100 dargestellt. Bei dieser Ausführungsform werden nicht nur einzelne Feststoffwärmespeicher in thermischen Kontakt miteinander gebracht, sondern auch die in ebenen angeordneten einzelnen Wärmeübertragungseinrichtungen 3 über Kupplungen 12 miteinander verbunden.

Die erfindungsgemäße Anlage kann jedoch auch netzunabhängig als Inselanlage betrieben werden, wenn die elektrischen Energiequellen entsprechende Sicherheit bieten. Die Heizelemente setzen in diesem Fall den verfügbaren Strom 1:1 in Wärme um. Im Falle einer Versorgung mit einer Photovoltaikanlage können die Heizelemente über entsprechende MPP Tracker direkt mit Gleichstrom betrieben werden, womit der Umwandlungsverlust (3 % - 10 %) zu Wechselspannung vermieden wird.

Grundsätzlich soll im Falle von elektrischer Energie der Strom aus erneuerbaren Quellen bezogen und gespeichert werden. Wenn allerdings der Netzstrom günstig ist, kann auch die Nutzung von importiertem Netzstrom in Betracht gezogen werden.

Das Wärmeübertragungsmedium ist in den meisten Fällen Wasserdampf, der ohne große Schwierigkeiten in industrielle Prozesse eingekoppelt werden kann. Durch eine Reglung am Ausgang der Sammelleitung 4, kann dem Dampf optional Wasser zugefügt werden, so dass bei Austritt von überhitztem Dampf Sattdampf entsteht. Die Steuerung dieser Aufbereitung übernimmt ebenfalls die verbaute Steuerung, indem sie die Ausgangstemperatur misst und eine Förderpumpe für Wasser steuert, das in den Dampf eingebracht wird.

Alternativ ist auch eine Entladung über Thermoöle möglich, die eine entsprechende Temperaturfestigkeit haben. Luft oder Gas als Wärmeträger sind ebenfalls möglich, aber aufgrund der hohen Volumenströme wegen der geringen Wärmekapazität deutlich weniger wirtschaftlich.

Die Drücke bei der Entnahme von Wasserdampf sind in der Regel mit 1 Bar moderat. Abhängig von den konkreten Anwendungen sind jedoch auch deutlich höhere Drücke ohne weiteres möglich.

Der erfindungsgemäße Feststoffwärmespeicher erfüllt insbesondere den Zweck, die Entnahme von Energie (Wärme) zeitlich von der Erzeugung der Energie (Wärme) zu entkoppeln. Wenn günstiger Strom, beispielsweise durch Photovoltaik oder Windkraft, zur Verfügung steht, wird Energie eingespeichert. Wenn Wärmebedarf besteht, z.B. während bewölkter Phasen oder nachts, wird Energie entnommen. Die Entnahmeleistung kann dabei über limitierte Zeit wesentlich höher sein, als es eine direkte Wärmeerzeugung beispielsweise über Photovoltaik zuließe.

### Bezugszeichenliste

- 1: Speichermodul
- 2: Heizelement
- 3: Wärmeübertragungseinrichtung
- 4: Sammelleitung Wärmeübertragung
- 5: erste Nuten für Heizelement
- 6: zweite Nuten für Wärmeübertragungselement
- 7: erste Bohrungen für Heizelement
- 8: zweite Bohrungen für Wärmeübertragungselement
- 9: Wärmeübertragungsmedium
- 10: Verteiler Heizelemente
- 11: Wärmeübertragungselemente
- 12: Kupplung zur Verbindung der Wärmeübertragungseinrichtungen
- 100: Gesamtspeicher
- 101a, 101b,: Ebenen von Speichermodulen 1
- S: Strömungsrichtung Wärmeübertragungsmedium
- T1, T2, T3,: Heizzonen

## Patentansprüche

1. Wärmeübertragungselement (11) aus thermisch leitendem Material, das monolithisch ausgebildet ist, umfassend
- zumindest eine Aufnahmevorrichtung (5, 7) zur Aufnahme zumindest eines Heizelements (2), die in dem Wärmeübertragungselement (11) angeordnet ist,
- zumindest eine Führungsvorrichtung (6, 8) zum Führen zumindest einer Wärmeübertragungseinrichtung (3), die in dem Wärmeübertragungselement (11) angeordnet ist,
- wobei das Wärmeübertragungselement (11) parallel zu der mindestens einen Aufnahmevorrichtung (5, 7) und/oder der mindestens einen Führungsvorrichtung (6, 8) mindestens zwei ebene Außenflächen aufweist, die in flächigem Kontakt mit einem Speichermodul (1) für Wärme bringbar sind.

2. Wärmeübertragungselement (11) nach Anspruch 1, wobei das Wärmeübertragungselement (11) als monolithisches einteiliges Element ausgebildet ist und die Aufnahmevorrichtung (5, 7) als erste Bohrungen (7) und die Führungsvorrichtung (6, 8) als zweite Bohrungen (8) oder zweite Nuten (6) in dem Wärmeübertragungselement (11) angeordnet sind.

3. Wärmeübertragungselement (11) nach Anspruch 1, wobei das Wärmeübertragungselement (11) als zweiteiliges monolithisches Element mit zwei Elementhälften (11a, 11b) ausgebildet ist und die Aufnahmevorrichtung (5, 7) als erste Nuten (5) auf den Innenflächen und die Führungsvorrichtung (6, 8) als zweite Nuten (6) auf den Innenflächen oder auf den Außenflächen der zwei Elementhälften (11a, 11b) angeordnet sind.

4. Wärmeübertragungselement (11) nach Anspruch 1 oder 2, wobei das zumindest eine Heizelement (2) als Aufnahmevorrichtung (5, 7) und die zumindest eine Wärmeübertragungseinrichtung (3) als Führungsvorrichtung (6, 8) in dem Wärmeübertragungselement (11) fest eingegossen angeordnet sind.

5. Wärmeübertragungselement (11) nach einem der Ansprüche 1 bis 4, wobei das Wärmeübertragungselement (11) aus einem metallischen Werkstoff, insbesondere aus Aluminium oder Eisen oder Legierungen davon, besteht.

6. Feststoffwärmespeicher umfassend
- zumindest ein Speichermodul (1),
- zumindest ein Heizelement (2), das mit dem zumindest einen Speichermodul (1) in thermisch leitendem Kontakt steht,
- zumindest eine Wärmeübertragungseinrichtung (3), die mit dem zumindest einen Speichermodul (1) in thermisch leitendem Kontakt steht,
- eine umgebende Hülle aus thermisch isolierendem Material,
wobei das zumindest eine Speichermodul (1) aufweist,
- Vorrichtungen (5, 7) zur Aufnahme zumindest eines Heizelements (2),
- Vorrichtungen (6, 8) zum Führen zumindest einer Wärmeübertragungseinrichtung (3),
**dadurch gekennzeichnet, dass** die Vorrichtungen (5, 7) zur Aufnahme zumindest eines Heizelements (2) und die Vorrichtungen (6, 8) zum Führen zumindest einer Wärmeübertragungseinrichtung (3) in einem Wärmeübertragungselement (11) nach einem der Ansprüche 1 bis 5 angeordnet sind, das mit dem zumindest einen Speichermodul (1) in thermisch leitendem Kontakt steht.

7. Feststoffwärmespeicher nach Anspruch 5, wobei das Speichermodul (1) aus einem metallischen Werkstoff, insbesondere aus Aluminium oder Eisen oder Legierungen davon, oder einem nicht-metallischen Material, das Wärme speichern kann, besteht.

8. Feststoffwärmespeicher nach einem der Ansprüche 5 bis 7, wobei der Feststoffwärmespeicher die Anschlüsse für das zumindest eine Heizelement (2) und die zumindest eine Wärmeübertragungseinrichtung (3) nur an einer Seite aufweist und die verbleibenden drei Seiten eben ausgeführt sind.

9. Feststoffwärmespeicher nach einem der Ansprüche 6 bis 8, wobei mehrere Speichermodule (1) zu einem Gesamtspeicher (100) kombinierbar sind und jedes Speichermodul (1) in thermischem Kontakt zu mindestens einem Heizelement (2) und zu mindestens einer Wärmeübertragungseinrichtung (3) steht, insbesondere über zumindest ein Wärmeübertragungselement (11) nach einem der Ansprüche 1 bis 5.

10. Feststoffwärmespeicher nach einem der Ansprüche 6 bis 9, wobei im Fall von mehreren Speichermodulen (1) die Wärmeübertragungseinrichtungen (3) schleifenförmig mäandernd oder harfenförmig zwischen den einzelnen Speichermodulen (1), insbesondere in einem Wärmeübertragungselement (11) nach einem der Ansprüche 1 bis 5, geführt werden.

11. Feststoffwärmespeicher nach einem der Ansprüche 6 bis 10, wobei im Fall von mehreren Speichermodulen (1) diese in Ebenen (101a, 101b, 101c, ...) angeordnet sind und die Wärmeübertragungseinrichtungen (3) jeder Ebene (101a, 101b, 101c, ...) von Speichermodulen (1) an eine Sammelleitung (4) angeschlossen sind.

12. Feststoffwärmespeicher nach einem der Ansprüche 6 bis 11, der im Fall von mehreren Speichermodulen (1) durch einen modularen Aufbau von mehreren Speichermodulen (1) zonenweise unterteilbar und betreibbar ist, in dem Heizelemente (2) zu Heizzonen (T1, T2, T3, ...) zusammengeschaltet sind.

13. Feststoffwärmespeicher nach Anspruch 12, wobei jede Heizzone (T1, T2, T3, ...) zumindest ein Thermoelement zur Erfassung der Temperatur aufweist, das mit einer Steuereinheit zur Temperatursteuerung der Heizzonen (T1, T2, T3, ...) verbunden ist.

14. Gesamtspeicher (100) umfassend
- zumindest zwei Feststoffwärmespeicher nach einem der Ansprüche 6 bis 13, die hintereinander und/oder nebeneinander angeordnet sind, wobei die zumindest zwei Feststoffwärmespeicher zumindest ein Wärmeübertragungselement (11) nach einem der Ansprüche 1 bis 5 aufweisen,
- eine den Gesamtspeicher (100) umgebende Hülle aus thermisch isolierendem Material.

15. Gesamtspeicher (100) nach Anspruch 14, wobei die zumindest zwei Feststoffwärmespeicher in zueinander thermisch leitendem Kontakt, hintereinander und/oder nebeneinander, angeordnet sind.
